# FASCICULE DE BREVET EUROPEEN

(11) **EP 3 469 319 B1**
(45) Date de publication et mention de la délivrance du brevet: **05.08.2020**
(21) Numéro de dépôt: 17732987.7
(22) Date de dépôt: 05.06.2017
(51) Int. Cl.: G01F 17/00, G06T 11/00, G01B 15/00

(54) **PROCEDE POUR DETERMINER LA CAPACITE DE RECIPIENTS EN VERRE**
VERFAHREN ZUR ERMITTLUNG DER KAPAZITÄT VON GLASBEHÄLTERN
METHOD FOR ASCERTAINING THE CAPACITY OF GLASS CONTAINERS

(30) Priorité: 09.06.2016 FR 1655290
(43) Date de publication de la demande: 17.04.2019
(73) Titulaire: Tiama, 69390 Vourles (FR)
(72) Inventeur: COSNEAU, Laurent, 69510 Soucieu-En-Jarrest (FR); COLLE, Olivier, 69600 Oullins (FR)
(74) Mandataire: Cabinet Beau de Loménie
(86) Numéro de dépôt international: PCT/FR2017/051414
(87) Numéro de publication internationale: WO 2017/212156

(56) Documents cités:
- US-A1- 2014 211 980
- Anthon Du Plessis: "CT News: The Stellenbosch CT scanner facility newsletter, vol. 2, no 1", , 31 janvier 2014 (2014-01-31), XP055339995, Extrait de l'Internet: URL:http://blogs.sun.ac.za/ctscanner/files /2013/07/CT-News-2014-Issue-1_final1.pdf [extrait le 2017-01-27] & Anthon Du Plessis: "Wine volume", , 10 janvier 2014 (2014-01-10), XP055339998, Extrait de l'Internet: URL:http://blogs.sun.ac.za/ctscanner/wine- volume/ [extrait le 2017-01-27]
- KRUTH J P ET AL: "Computed tomography for dimensional metrology", CIRP ANNALS, vol. 60, no. 2, 13 juillet 2011 (2011-07-13), pages 821-842, XP028262022, ISSN: 0007-8506, DOI: 10.1016/J.CIRP.2011.05.006 [extrait le 2011-06-03] cité dans la demande

## Description

La présente invention concerne le domaine technique du contrôle dimensionnel de récipients au sens général en verre, et elle vise plus particulièrement la mesure de la capacité de tels récipients.

La capacité ou la contenance d'un récipient est le volume de liquide minimal qu'il contient si il est rempli à ras bord ou jusqu'à une hauteur déterminée sous la surface de la bague du récipient. Des dispositions règlementaires ou administratives imposent de connaitre avec précision la capacité des récipients. La capacité réelle des récipients doit correspondre à la capacité indiquée sur le récipient qui est par exemple gravée sur le récipient ou inscrite sur une étiquette rapportée sur le récipient.

Certaines dérives du procédé de fabrication des récipients peuvent conduire à des variations de leur capacité. A volume de verre constant, si le volume du moule augmente par usure, le volume intérieur du récipient augmente. A volume de moule constant, si le volume de verre augmente, la capacité du récipient diminue. De même, des variations de forme (hauteur, ovalisation du corps etc.) peuvent avoir une influence sur la capacité des récipients. Pour mesurer les caractéristiques volumiques des moules, le brevet FR 2 717 574 enseigne un procédé et un dispositif de jaugeage de la cavité d'un moule de verrerie.

Pour mesurer la capacité des récipients, il est connu par exemple une machine commercialisée par la société AGR international, Inc. (http://www.agrintl.com/products/view/10/Fill-Height-Tester), reposant sur le principe de la pesée. Cette machine comporte un marbre de pesée sur lequel est en appui le récipient vide reposant par son fond, en équilibre statique par gravité sur un plan de pose horizontal. Ce récipient est ensuite rempli d'un liquide de masse volumique connue jusqu'à un niveau nominal considéré par rapport au plan d'appui délimité par le marbre de pesée. Le remplissage du récipient au niveau nominal est réalisé en remplissant le récipient au-dessus du niveau nominal et en retirant le volume excessif par une pipette prenant appui sur la surface de la bague du récipient de sorte que l'orifice de la pipette se trouve situé au niveau nominal par rapport au plan d'appui. Cette machine réalise par pesée, à une température connue, la mesure de la quantité de liquide réellement contenue à l'intérieur du récipient et correspondant à la capacité effective du récipient.

Un inconvénient de cette machine concerne la durée pour réaliser cette mesure. De plus, cette machine présente l'inconvénient de ne pas pouvoir réaliser d'autres mesures dimensionnelles si ce n'est le poids à vide du récipient. Cette machine vient ainsi en complément des appareils automatiques de contrôle dimensionnel, du type optique ou par contact, qui ne permettent pas de mesurer la capacité des récipients.

Il est également connu par le document US 2014/211980 une méthode et un appareil à rayons X pour mesurer le volume d'un liquide remplissant partiellement une bouteille en détectant notamment la surface du liquide à l'intérieur de la bouteille. Si cette méthode permet de mesurer le volume d'un liquide à l'intérieur d'une bouteille, cette technique ne permet pas de mesurer la capacité réelle d'une bouteille d'une part, et selon les conditions normalisées de mesure d'autre part.

La demande de brevet US 2010/303287 décrit un appareil à rayons X adapté pour déterminer si un objet contient un liquide. Si un tel document permet de mesurer le volume de liquide contenu à l'intérieur d'une bouteille, la technique décrite par ce document présente les mêmes inconvénients que la demande de brevet US 2014/211980.

La publication Anthon Du Plessis : «CT News : The Stellenbosch CT scanner facility newsletter, vol.2, n°1 » décrit la possibilité de déterminer à l'aide d'un appareil de tomographie par rayons X, le volume de liquide contenu à l'intérieur d'une bouteille. Ce document prévoit à cet effet de réaliser un modèle numérique de chaque élément constitutif d'une bouteille contenant un liquide et fermé par un bouchon, tels que les modèles du récipient, du bouchon ou du liquide.

La présente invention vise à remédier aux inconvénients de l'état de la technique en proposant un nouveau procédé pour déterminer de manière précise et rapide, la capacité des récipients en verre.

Un autre objet de l'invention est de proposer un procédé adapté pour déterminer la capacité des récipients mais également divers autres mesures dimensionnelles du récipient afin de limiter la durée du cycle de mesure des récipients.

Pour atteindre de tels objectifs, le procédé selon l'invention comporte les étapes suivantes :
a) acquérir au moyen d'un appareil de tomographie par rayons X assisté par ordinateur, plusieurs images radiographiques du récipient sous des angles de projection différents ;
b) transmettre les images radiographiques à un calculateur ;
c) analyser les images radiographiques par le calculateur ;

Selon l'invention, le procédé consiste à acquérir les images radiographiques pour un récipient vide pour faire apparaître sur les images radiographiques uniquement la matière du récipient ;
- on détermine le plan de pose du récipient correspondant à la représentation du plan de pose mécanique sur lequel le récipient repose par son fond ;
- les images radiographiques sont analysées pour :
   i) construire un modèle numérique du récipient à partir des images radiographiques ;
   ii) déterminer la surface interne du modèle numérique du récipient ;
   iii) positionner un plan de niveau de remplissage sur le modèle numérique du récipient, parallèlement au plan de pose et à une distance du sommet du modèle numérique du récipient ;
   iv) mesurer par calcul, le volume interne du modèle numérique du récipient délimité par la surface interne du modèle numérique et par le plan de niveau de remplissage, cette mesure étant la capacité de remplissage du récipient.

Le procédé selon l'invention garantit le respect des conditions normalisées de mesure de la capacité d'un récipient sans avoir à remplir ledit récipient par un liquide.

De plus, le dispositif selon l'invention peut comporter en outre en combinaison au moins l'une et/ou l'autre des caractéristiques additionnelles suivantes :
Pour déterminer le volume du modèle numérique du récipient :
a) on détermine à partir de plusieurs images radiographiques du récipient, un ensemble complet de tranches d'épaisseur donnée, chaque point de chaque tranche contenant une mesure de densité ;
b) on détermine dans chaque tranche, le contour interne fermé du récipient, comme la limite de la zone de densité égale à celle de l'air ;
c) on détermine un volume interne pour chaque tranche correspondant au produit de l'épaisseur de la tranche avec la surface du contour fermé ;
d) on détermine le volume du récipient comme correspondant au moins à la somme des volumes internes d'au moins une série de tranches connexes.

Selon cette variante de réalisation, le procédé consiste à :
a) acquérir les images radiographiques du récipient alors que le récipient repose par son fond sur un plan de pose mécanique et subit entre chaque acquisition d'une image radiographique, une rotation autour d'un axe de rotation orthogonal au plan de pose mécanique ;
b) déterminer des tranches connexes entre elles en étant délimitées chacune par des plans communs parallèles au plan de pose mécanique ;
c) déterminer le volume interne du récipient en sommant les volumes internes de toutes les tranches comprises entre le plan de pose mécanique et le plan de niveau de remplissage.

Avantageusement, le procédé consiste à déterminer le volume interne du récipient en sommant toutes les tranches complètes comprises entre le plan de pose mécanique et le plan de niveau de remplissage et en y ajoutant :
- lorsque le niveau de remplissage ne passe pas par un plan d'une tranche, le volume d'une tranche extrême supérieure située entre le plan de niveau de remplissage et le plan commun entre ladite tranche extrême supérieure et la tranche complète voisine ;
- lorsque le plan de pose mécanique ne passe pas par un plan d'une tranche, le volume interne d'une tranche extrême inférieure située entre le plan de pose mécanique et le plan commun entre ladite tranche extrême inférieure et la tranche complète voisine, ledit volume interne se trouvant délimité par la surface interne du fond du récipient.

Selon une autre variante de réalisation, pour déterminer le volume interne du modèle numérique du récipient :
a) on construit un modèle numérique tridimensionnel du récipient ;
b) on détermine la surface interne du modèle numérique tridimensionnel du récipient comme étant la surface interne du récipient ;
c) on positionne le plan de niveau de remplissage fermant la surface interne du modèle numérique tridimensionnel du récipient ;
d) on mesure par calcul, le volume délimité par la surface interne du modèle numérique tridimensionnel et le plan de niveau de remplissage, ce volume correspondant à la capacité de remplissage du récipient.

Selon cette variante :
a) on positionne le modèle numérique tridimensionnel du récipient posé sur son fond sur un plan de pose virtuel de l'espace virtuel considéré comme horizontal par hypothèse ;
b) on positionne le plan de niveau de remplissage parallèle au plan de plan de pose virtuel, fermant la surface interne du modèle numérique tridimensionnel, à une distance du sommet du modèle numérique tridimensionnel du récipient.

Selon un premier mode de réalisation, on positionne le modèle numérique tridimensionnel du récipient sur le plan de pose virtuel de manière à ce que par simulation de la gravité, le modèle numérique tridimensionnel du récipient rempli virtuellement jusqu'au plan de niveau de remplissage par un liquide de densité déterminée, se trouve dressé en équilibre statique sur trois points de son fond au contact du plan de pose virtuel.

Selon un autre mode de réalisation, on positionne le modèle numérique tridimensionnel du récipient sur le plan de pose virtuel de manière à ce que par simulation de la gravité, le modèle tridimensionnel du récipient, se trouve dressé en équilibre statique sur trois points de son fond au contact du plan de pose virtuel.

Selon un autre mode de réalisation, on considère que le récipient étant posé sur un plan de pose mécanique durant l'acquisition des radiographies, le modèle numérique tridimensionnel du récipient est posé sur le plan de pose virtuel qui n'est autre que la représentation (virtuelle) du plan de pose mécanique connu. Autrement dit, dans ce mode simplifié de réalisation, le plan de pose virtuel est la représentation du plan de pose mécanique dans l'espace virtuel. On économise ainsi l'étape de simulation de la gravité.

Avantageusement, le sommet du modèle numérique tridimensionnel du récipient est déterminé comme :
a) le point appartenant au modèle numérique tridimensionnel, le plus éloigné du plan de pose virtuel ;
b) ou le point d'intersection d'un plan de surface de bague du modèle numérique tridimensionnel avec un axe de symétrie dudit modèle, avec l'axe de symétrie étant sensiblement orthogonal au plan de pose virtuel et le plan de surface de bague étant défini comme :
   i. un plan passant par trois points de la surface de bague ;
   ii. ou un plan moyen de la surface de bague ;
   iii. ou un plan positionné en équilibre statique sur la surface de bague.

Puisque pour mesurer la capacité nominale du récipient, le plan de niveau de remplissage est positionné à une distance nominale du sommet du modèle numérique tridimensionnel, alors de même pour mesurer la capacité à ras bord du récipient, le plan de niveau de remplissage est positionné à une distance nulle du sommet du modèle numérique tridimensionnel.

Selon une autre caractéristique avantageuse de l'invention, le procédé consiste à construire un modèle numérique du récipient à partir des images radiographiques afin de déterminer au moins une caractéristique dimensionnelle dudit modèle numérique du récipient, différente de sa capacité.

Par exemple, le procédé consiste à déterminer en tant que caractéristiques dimensionnelles du modèle numérique du récipient, l'épaisseur de la paroi du récipient, un diamètre extérieur du corps du récipient, un diamètre interne du col du récipient, la verticalité du corps ou du col du récipient, la planéité de la surface de bague du récipient.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est vue montrant la mesure de la capacité d'un récipient.
La **Figure 2A** est une vue schématique montrant un appareil de tomographie assistée par ordinateur permettant la mise en œuvre du procédé de mesure conforme à l'invention et comportant un capteur sensible aux rayons X de dimensions supérieures à la taille du récipient à inspecter.
La **Figure 2B** est une vue schématique montrant un appareil de tomographie assistée par ordinateur permettant la mise en œuvre du procédé de mesure conforme à l'invention et comportant un capteur sensible aux rayons X de dimensions inférieures à la taille du récipient à inspecter.
La **Figure 3** illustre un exemple d'un modèle numérique tridimensionnel d'un récipient obtenu par un appareil de tomographie.
La **Figure 4A** illustre un exemple d'un modèle numérique d'un récipient obtenu par sommation de tranches.
Les **Figures 4B** et **4C** sont des vues explicitant la prise en compte du volume interne de la tranche extrême inférieure d'un récipient en fonction de la position de la tranche extrême.
La **Figure 4D** est une vue explicitant la prise en compte du volume d'une tranche d'un récipient passant par la piqûre du récipient.

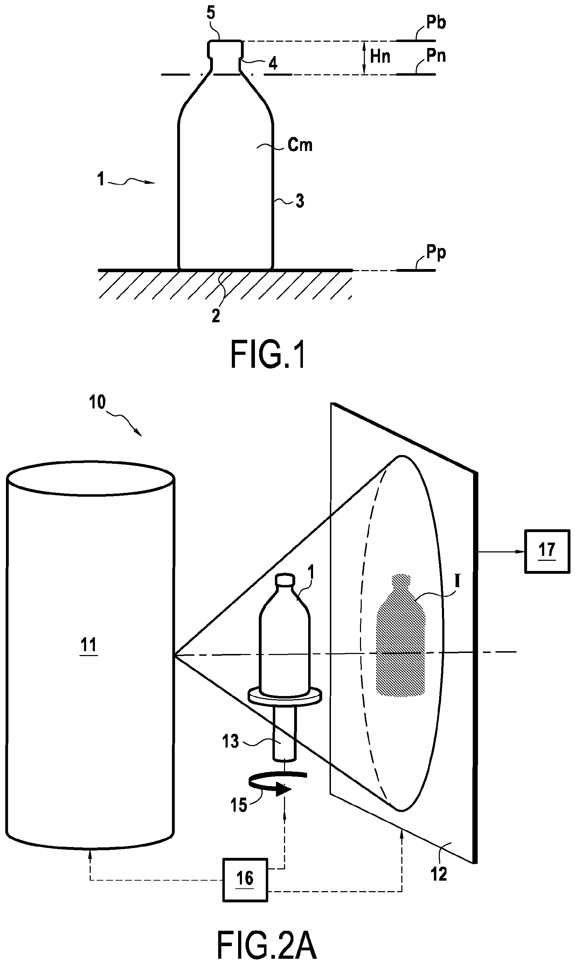

L'objet de l'invention concerne un procédé pour déterminer la capacité de récipients **1** en verre tels que des bouteilles, des pots ou des flacons en verre. Tel que cela ressort de la **Fig. 1****,** un récipient **1** est un objet creux comportant classiquement, un fond **2** à partir duquel s'élève un corps **3** se prolongeant par un col **4** terminé par une bague **5** délimitant l'ouverture ou l'embouchure permettant de remplir ou de vider le récipient. La capacité ou la contenance du récipient **1** est le volume de liquide qu'il contient par la surface interne **Sf** de sa paroi lorsque le récipient repose par son fond, en équilibre statique par gravité sur un plan horizontal appelé plan de pose mécanique **Pp**.

La capacité ras-bord du récipient **1** correspond au volume de liquide remplissant le récipient jusqu'au plan dit de bague **Pb** passant par la bague **5** du récipient. La capacité nominale **Cn** du récipient **1** correspond au volume de liquide remplissant le récipient jusqu'à un plan de niveau **Pn** de remplissage du liquide, situé à une hauteur déterminée **Hn** du plan de bague **Pb.**

Le procédé selon l'invention vise ainsi à déterminer la capacité de récipients **1** à l'aide de la technique de la tomographie assistée par ordinateur connue sous l'appellation anglaise, par Computed Tomography (C. T.). Cette technique de contrôle non destructif de tomographie assistée par ordinateur est décrite en détail notamment dans l'article : Computed tomography for dimensional metralogy » J.P. Kruth and all. CIRP Annals - Manufacturing Technology 60 (2011) 821-842*.*

Conformément à l'invention, la capacité des récipients **1** est déterminée alors que les récipients **1** sont vides c'est-à-dire que les récipients ne sont pas remplis par un liquide mais par l'air ambiant.

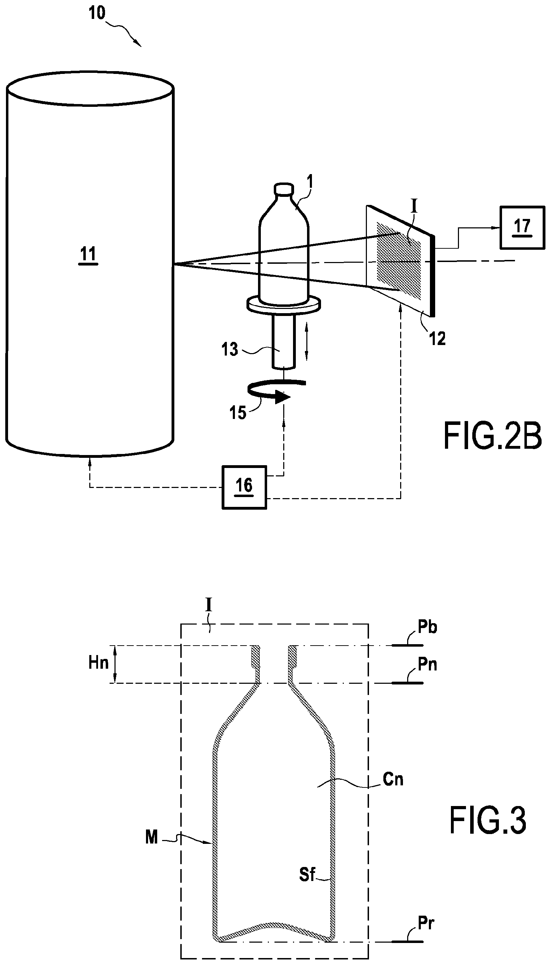

Tel que cela ressort plus précisément des **Fig. 2A****,** **2B****,** un appareil de tomographie assistée par ordinateur **10** comporte de manière classique, dans une enceinte étanche aux rayons X, au moins une source **11** de génération de rayons X issus de son foyer d'émission et au moins un capteur **12** linéaire ou matriciel sensible aux rayons X. L'appareil **1** comporte également un support **13** servant de plan de pose mécanique **Pp** pour le récipient **1** et adapté pour positionner entre la source **11** et le capteur **12,** le récipient **1** qui se trouve ainsi irradié par les rayons X. Par absorption et diffusion, la matière du récipient vide **1** atténue les rayons X qui la traversent en fonction de la masse atomique et de l'épaisseur de matière traversée. Le récipient étant vide, seule la matière du récipient atténue les rayons X. Le capteur **12** sensible aux rayons X situé à l'opposé du tube par rapport au récipient, reçoit les rayons X atténués, et délivre une image de l'atténuation qu'elle provoque, c'est-à-dire une image radiographique **I** de la paroi du récipient **1.**

L'appareil **10** comporte également un système **15** pour créer un mouvement relatif entre le récipient **1** et le couple source **11** - capteur **12.** Classiquement, ce système **15** provoque un déplacement de valeur connue du récipient **1** par rapport au couple source **11 -** capteur **12,** qui reste fixe. Avantageusement, ce système de déplacement **15** assure la rotation du récipient sur lui-même autour d'un axe de rotation fixe qui de préférence mais non obligatoirement, est confondu avec l'axe vertical de symétrie du récipient.

L'appareil **10** comporte également une unité **16** de commande de la source **11,** du capteur **12** et du système de déplacement **15** permettant le fonctionnement de l'appareil et l'obtention des images radiographiques. Ainsi, cette unité de commande **16** assure un déplacement relatif connu du récipient **1** par rapport à la source **11** et au capteur **12** de manière à réaliser des projections du récipient suivant des angles variables. L'unité de commande **16** assure l'acquisition pendant ce déplacement, de plusieurs images radiographiques. Ainsi, le récipient **1** est déplacé entre chaque acquisition d'une image radiographique, de manière que chaque image radiographique soit une projection du récipient suivant des directions différentes entre elles. Les images radiographiques du récipient vide acquises sont transmises à un calculateur **17** pour analyse et traitement.

Il est à noter que dans l'exemple illustré à la **Fig. 2A**, le capteur **12** présente une hauteur de champ supérieure à la taille du récipient **1**. Le système de déplacement **15** est commandé pour assurer la rotation du récipient sur lui-même typiquement sur un tour et l'unité **16** assure l'acquisition des différentes projections du récipient sur les 360° de rotation.

Dans l'exemple de réalisation illustré à la **Fig. 2B****,** le capteur **12** présente une hauteur de champ inférieure à la taille du récipient **1.** Selon cet exemple, le système de déplacement **15** est conçu pour assurer également un déplacement en translation verticale relatif entre le récipient **1** et la source **11** et/ou le capteur **12** pour analyser par balayage la totalité du récipient **1**.

Par exemple, le système de déplacement **15** assure la rotation du récipient **1** sur lui-même et une translation verticale de récipient **1** par rapport au couple source **11**-capteur **12,** qui reste fixe. Dans le cas où le capteur **12** est un capteur linéaire de champ horizontal, l'unité **16** pilote le système de déplacement pour positionner le récipient de manière que l'extrémité haute du récipient soit positionnée dans le champ du capteur **12.** L'unité **16** pilote ensuite la rotation du récipient sur un tour et assure l'acquisition des projections du récipient sur le capteur pendant ce tour. Le système de déplacement **15** déplace en translation vers le bas le récipient selon un pas incrémental avant la rotation du récipient sur lui-même et l'acquisition des projections du récipient. Les étapes de déplacement et d'acquisition sont renouvelées jusqu'au positionnement de l'extrémité inférieure du récipient dans le champ du capteur **12.**

Dans le cas où le capteur **12** est un capteur linéaire de champ horizontal, l'unité **16** peut alternativement piloter le système de déplacement pour conférer au récipient un mouvement hélicoïdal combinant en continu la rotation autour de l'axe et la translation selon ledit axe, ce qui permet une acquisition d'une multitude d'images radiographiques ou de projections du récipient.

Un appareil connu de tomographie assistée par ordinateur tel que décrit ci-dessus est commercialisé par la société RX SOLUTIONS sous la dénomination commerciale EasyTom.

Un tel appareil de tomographie assistée par ordinateur **10** permet la mise en œuvre d'un procédé pour déterminer la capacité de récipients en verre **1.**

Ce procédé comporte plusieurs étapes dont la première consiste à acquérir au moyen de cet appareil de tomographie par rayons X assisté par ordinateur **10,** plusieurs images radiographiques **I** du récipient **1** sous des angles de projection différents. Cette étape est réalisée alors que le récipient **1** est vide. L'étape suivante consiste à transmettre ces images radiographiques au calculateur **17.** Le calculateur analyse ensuite les images radiographiques pour déterminer la capacité de remplissage du récipient **1.**

Cette étape d'analyse vise :
- à construire un modèle numérique du récipient **1** à partir des images radiographiques du récipient vide **1** ;
- à déterminer la surface interne **Sf** du modèle numérique du récipient ;
- à positionner un plan de niveau de remplissage **Pn** sur le modèle numérique du récipient parallèle au plan de pose et à une distance **Hn** du sommet du modèle numérique du récipient ;
- à mesurer par calcul, le volume interne du modèle numérique du récipient délimité par la surface interne **Sf** et par le plan de niveau de remplissage, en sachant que cette mesure correspond à la capacité de remplissage **Cn** du récipient.

Comme les images radiographiques sont prises alors que le récipient **1** est vide, les images radiographiques **I** font apparaître uniquement la matière du récipient contrastée par rapport à l'air, dont l'atténuation est négligeable devant celle du verre constituant le récipient. La surface interne **Sf** du récipient devient alors aisée à déterminer avec précision dans le modèle numérique **M** du récipient. Un volume de grande précision est donc déterminé à partir de la détermination de la surface interne **Sf** du récipient vide.

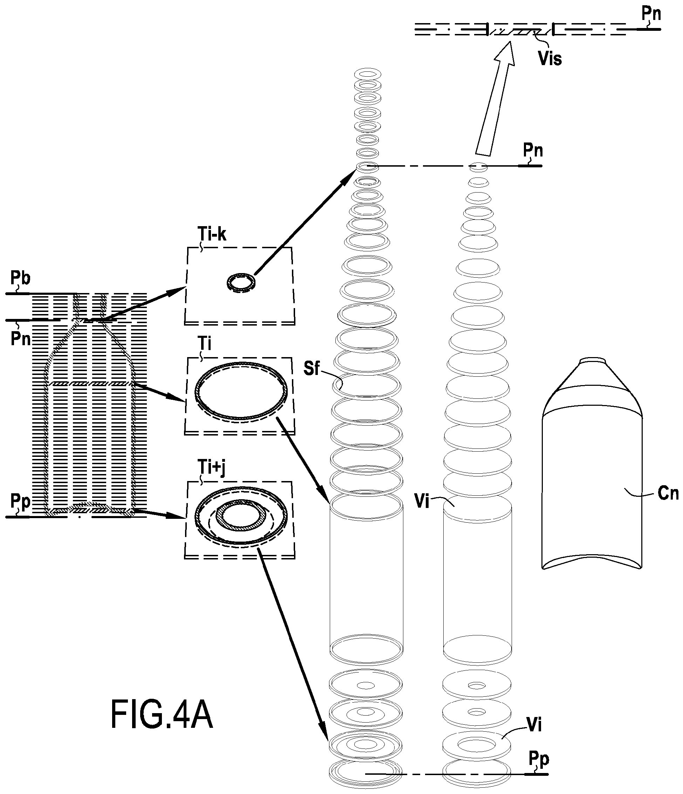

La description qui suit décrit deux variantes de réalisation pour la construction du modèle numérique **M.** Selon la première variante avantageuse de réalisation illustrée à la **Fig. 3**, le modèle numérique **M** construit pour déterminer la surface interne **Sf** est tridimensionnel et le plan de niveau de remplissage **Pn** est parallèle à un plan de pose qui est un plan de pose virtuel ou plan de référence **Pr**. Il est à noter que ce plan de pose virtuel correspond à la représentation (espace virtuel) du plan de pose mécanique sur lequel le récipient repose lors de l'acquisition des radiographies. Selon la deuxième variante illustrée aux **Fig. 4A** à **4D**, le module numérique **M** pour déterminer la surface interne **Sf** est construit à partir de la sommation de tranches du récipient et le plan de niveau de remplissage **Pn** est parallèle à un plan de pose qui correspond au plan de pose mécanique du récipient.

Selon une première variante de réalisation illustrée à la **Fig. 3**, le procédé selon l'invention vise à construire un modèle numérique tridimensionnel **M** du récipient à partir des images radiographiques, pour déterminer la capacité de remplissage du récipient.

Pour rappel, l'analyse des images radiographiques du récipient **1** vide permet de reconstruire un modèle numérique tridimensionnel du récipient sous la forme d'un ensemble de « voxels », c'est-à-dire de volumes unitaires dont la valeur est l'absorption de rayons X qu'ils créent, ce qui aboutit donc à une fonction de distribution volumique très similaire à une distribution de densité.

La réalisation d'un modèle numérique tridimensionnel est la façon - en termes mathématique, graphique et de structure de données - dont des objets tridimensionnels sont représentés et manipulés dans une mémoire d'ordinateur. Ce modèle numérique tridimensionnel est analysé en réalisant une segmentation en régions de densités différentes, pour mesurer des dimensions (longueurs, surfaces, épaisseurs, volumes). Après segmentation, le modèle numérique tridimensionnel peut rester volumique ou bien être transformé en modèle surfacique, c'est-à-dire dans lequel sont modélisées des surfaces séparant des volumes homogènes.

Dans les modélisations surfaciques, un objet est défini par son enveloppe, ses surfaces-frontières, ce qui permet d'appréhender les notions intérieur/extérieur, et les surfaces fermées définissent des volumes, auxquels on peut affecter par exemple une masse dès lors qu'on donne une masse volumique de la matière. Les surfaces se modélisent de plusieurs manières telles que par modélisation polygonale, par courbes ou surfaces paramétriques (cylindres, cônes, sphères, splines, ...) ou par subdivision de surfaces. A l'aide d'un maillage de polyèdres, par exemple des triangles, les surfaces des objets sont représentées par des ensembles de facettes planes connexes par leurs arêtes.

Une modélisation volumique consiste à baser la représentation sur des ensembles de volumes élémentaires identiques appelés Voxels.

Afin d'opérer des mesures de longueurs il existe plusieurs approches.

Dans une première méthode volumique, il est possible de parcourir un modèle volumique suivant une droite ou un faisceau de droites et déterminer les voxels de frontière matière / air.

Dans une deuxième méthode surfacique, il est possible de calculer un segment dont les extrémités sont les intersections d'une droite avec la surface d'un modèle surfacique. Les algorithmes résolvent assez bien les problèmes topologiques. Le point est unique. Enfin, une méthode mixte consiste à transformer le modèle volumique en modèle surfacique, puis à appliquer la deuxième méthode.

Après la construction de ce modèle numérique tridimensionnel **M** du récipient à partir des images radiographiques, le procédé consiste à déterminer la surface interne **Sf** du modèle numérique tridimensionnel du récipient comme correspondant à la surface interne du récipient.

Le procédé consiste ensuite à positionner le plan de niveau de remplissage **Pn** de manière à fermer la surface interne du modèle numérique tridimensionnel du récipient. Ainsi, il est défini une surface fermée entourant ou enveloppant complètement le volume de remplissage du récipient.

Le procédé consiste ensuite à mesurer par calcul, le volume intérieur délimité par cette surface fermée à savoir par la surface interne du modèle numérique tridimensionnel et le plan de niveau de remplissage. En effet, le volume intérieur délimité par cette surface fermée correspond au volume interne de remplissage du récipient jusqu'au niveau de remplissage.

Selon une caractéristique avantageuse de réalisation, le procédé consiste à positionner le modèle numérique tridimensionnel **M** du récipient posé sur son fond sur un plan de référence **Pr** de l'espace virtuel considéré comme horizontal par hypothèse. Comme ce plan de référence simule la pose du récipient sur un plan de pose mécanique, ce plan de référence **Pr** est désigné aussi par un plan de pose virtuel dans la suite de la description pour cette variante de réalisation.

Selon un autre mode de réalisation, le plan de pose virtuel est la représentation du plan de pose mécanique dans l'espace virtuel.

Ensuite, le plan de niveau de remplissage **Pn** est positionné parallèlement au plan de référence ou plan de pose virtuel **Pr** à une distance **Hn** du sommet du modèle numérique tridimensionnel du récipient.

Selon une variante avantageuse de réalisation, le procédé consiste à positionner le modèle numérique tridimensionnel **M** du récipient sur le plan de référence ou plan de pose virtuel **Pr** de manière à ce que par simulation de la gravité, le modèle tridimensionnel du récipient, se trouve dressé en équilibre statique sur trois points de son fond au contact du plan de référence ou plan de pose virtuel **Pr**. Cette technique prend en compte la valeur d'une densité pour le matériau constitutif du récipient.

Selon une autre variante avantageuse de réalisation, le procédé consiste à positionner le modèle numérique tridimensionnel **M** du récipient sur le plan de référence ou plan de pose virtuel **Pr** de manière à ce que par simulation de la gravité, le modèle numérique tridimensionnel du récipient rempli virtuellement jusqu'au plan de niveau de remplissage par un liquide de densité déterminée, se trouve dressé en équilibre statique sur trois points de son fond au contact du plan de référence ou plan de pose virtuel **Pr**. Cette méthode de simulation permet d'approcher au mieux la réalité d'un récipient rempli d'un liquide et reposant sur un plan de pose définissant le plan de niveau de remplissage.

Dans le cas où le plan de niveau de remplissage **Pn** est positionné à une distance **Hn** du sommet du modèle numérique tridimensionnel **M** du récipient, le sommet du modèle numérique tridimensionnel **M** du récipient est déterminé comme le point appartenant au modèle numérique tridimensionnel, le plus éloigné du plan de référence ou plan de pose virtuel **Pr** ou comme le point d'intersection d'un plan de surface de bague **Pb** du modèle numérique tridimensionnel avec un axe de symétrie dudit modèle. Dans ce dernier cas, l'axe de symétrie est sensiblement orthogonal au plan de référence ou plan de pose virtuel **Pr** et le plan de surface de bague **Pb** est défini comme un plan passant par trois points de la surface de bague, ou un plan moyen de la surface de bague ou un plan positionné en équilibre statique sur la surface de bague. Bien entendu, le procédé selon l'invention peut être mis en œuvre pour un récipient ne comportant pas un axe de symétrie.

Il découle de la description qui précède que pour mesurer la capacité à ras bord du récipient, le procédé consiste à positionner le plan de niveau de remplissage **Pn** à une distance **Hn** nulle du sommet du modèle numérique tridimensionnel.

Selon une variante du procédé, pour mesurer la capacité à ras bord du récipient, le procédé consiste à considérer que le plan de niveau de remplissage **Pn** est confondu avec plan de surface de bague **Pb**.

Dans le même sens, pour mesurer la capacité nominale **Cn** du récipient, le procédé consiste à positionner le plan de niveau de remplissage **Pn** à une distance nominale **Hn** du sommet du modèle numérique tridimensionnel.

Selon une deuxième variante de réalisation illustrée à la **Fig. 4A**, le procédé selon l'invention vise à construire un modèle numérique **M** du récipient à partir des images radiographiques du récipient vide, pour déterminer le volume du modèle numérique du récipient.

Pour déterminer le volume du modèle numérique du récipient, le procédé consiste à déterminer à partir de plusieurs images radiographiques du récipient, un ensemble complet de tranches **Ti** d'épaisseur donnée en considérant que chaque point de chaque tranche contient une mesure de densité. Le procédé consiste ensuite à déterminer dans chaque tranche **Ti,** la surface interne **Sf** du récipient, comme la limite de la zone de densité égale à celle de l'air (qui est quasi-nulle). Le procédé consiste à déterminer un volume interne **Vi** pour chaque tranche **Ti,** ce volume interne **Vi** correspondant au produit de l'épaisseur de la tranche avec la surface du contour fermé du récipient. Le procédé consiste enfin à prendre en compte une série de tranches connexes et à faire la somme des volumes de ces tranches connexes pour déterminer le volume du récipient.

Selon une caractéristique avantageuse de réalisation, le procédé consiste à acquérir les images radiographiques du récipient alors que le récipient repose par son fond sur le plan de pose mécanique **Pp** et subit entre chaque acquisition d'une image radiographique, une rotation autour d'un axe de rotation orthogonal au plan de pose mécanique. Le procédé consiste à déterminer des tranches connexes entre elles en étant délimitées chacune par des plans communs parallèles au plan de pose mécanique **Pp.** Le volume du récipient est déterminé en sommant les volumes de toutes les tranches comprises entre le plan de pose mécanique et le plan de niveau de remplissage.

De façon avantageuse, le procédé consiste à déterminer le volume interne en sommant toutes les tranches complètes comprises entre le plan de pose mécanique et le plan de niveau de remplissage et en y ajoutant les volumes internes de tranches extrêmes situées au niveau du plan de niveau de remplissage **Pn** et du plan de pose mécanique **Pp.**

Ainsi, lorsque le plan de niveau de remplissage **Pn** ne passe pas par un plan d'une tranche, on ajoute au volume interne du récipient, le volume interne **Vis** d'une tranche extrême supérieure située entre le plan de niveau de remplissage **Pn** et le plan commun entre ladite tranche extrême supérieure et la tranche complète voisine.

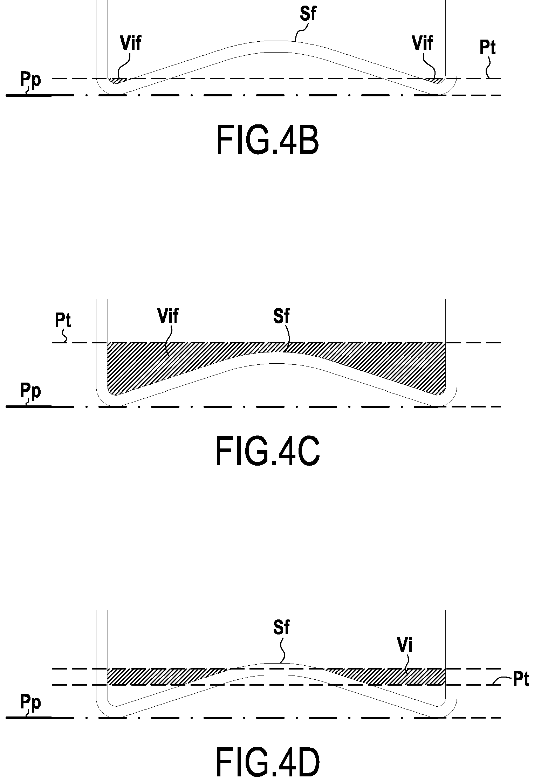

De même, comme illustré aux **Fig. 4B** et **4C****,** lorsque le plan de pose mécanique **Pp** ne passe pas par un plan d'une tranche, on ajoute au volume, le volume interne **Vif** d'une tranche extrême inférieure située entre le plan de pose mécanique **Pp** et le plan commun **Pt** séparant ladite tranche extrême inférieure de la tranche complète voisine. Dans ce cas, le volume interne **Vif** d'une tranche extrême inférieure est délimité par la surface interne du fond **Sf** du récipient.

Sur la **Fig. 4D** est illustrée la situation d'un fond de bouteille piqué, c'est-à-dire fortement bombé au centre par ce qu'on appelle la « piqûre ». Il est alors considéré que le volume interne **Vi** d'une tranche située au niveau de la piqûre est déterminé en considérant cette piqûre et donc la surface interne **Sf** du fond de la bouteille délimite le volume interne **Vi** de la tranche.

La mesure de volume de remplissage obtenue par le procédé, peut également être modifiée par l'ajout ou le retrait d'un volume correspondant à la forme de ménisque qu'aurait un liquide de remplissage dont la viscosité serait connue. Pour ce faire, la forme de la surface interne du récipient peut être prise en compte.

Le procédé selon l'invention présente l'avantage de se combiner à d'autres mesures dimensionnelles effectuées à l'aide du même appareil de tomographie par rayons X assisté par ordinateur **10.** Il peut mesurer la contenance des récipients de toutes formes, et n'est pas sensible à la teinte du verre.

Il est à noter que le procédé est destiné à être utilisé en verrerie pour contrôler la fabrication de bouteilles. Il n'y a donc aucun avantage pratique à remplir les récipients. Bien au contraire, en mesurant les récipients vides, la détermination de la surface interne est rendue plus précise du fait du contraste élevé entre l'atténuation du verre par rapport à celle de l'air, quasi nulle, les radiographies n'enregistrant finalement que l'atténuation due au verre.

Ainsi, un modèle numérique du récipient vide est construit à partir des images radiographiques afin de déterminer au moins une caractéristique dimensionnelle dudit modèle numérique du récipient, différente de sa capacité. Le procédé consiste à déterminer en tant que caractéristiques dimensionnelles du modèle numérique du récipient, l'épaisseur de la paroi du récipient, un diamètre extérieur du corps du récipient, un diamètre interne du col du récipient, la verticalité du corps ou du col du récipient, la planéité de la surface de bague du récipient. Le procédé selon l'invention permet ainsi d'accéder à la capacité d'un récipient mais également à d'autres caractéristiques dimensionnelles du récipient.

L'invention n'est pas limitée aux exemples décrits et représentés car diverses modifications peuvent y être apportées sans sortir de son cadre, comme défini par les revendications 1-13.

## Revendications

1. Procédé pour déterminer la capacité de récipients en verre (1), comportant les étapes suivantes :
• acquérir au moyen d'un appareil de tomographie par rayons X assisté par ordinateur (**10**), plusieurs images radiographiques (**I**) du récipient sous des angles de projection différents ;
• transmettre les images radiographiques à un calculateur (**17**) ;
• analyser les images radiographiques par le calculateur pour construire un modèle numérique (**M**) du récipient à partir des images radiographiques, **caractérisé en ce que** :
▪ les images radiographiques (**I**) sont acquises pour un récipient vide pour faire apparaître sur les images radiographiques uniquement la matière du récipient ;
▪ on détermine le plan de pose du récipient correspondant à la représentation du plan de pose mécanique sur lequel le récipient repose par son fond ;
▪ les images radiographiques sont analysées pour :
- déterminer la surface interne (**Sf**) du modèle numérique du récipient ;
- positionner un plan de niveau de remplissage (**Pn**) sur le modèle numérique du récipient, parallèlement au plan de pose et à une distance nominale (**Hn**) du sommet du modèle numérique du récipient ;
- mesurer par calcul, le volume interne du modèle numérique du récipient délimité par la surface interne (**Sf**) du modèle numérique et par le plan de niveau de remplissage, cette mesure étant la capacité de remplissage (**Cn**) du récipient.

2. Procédé selon la revendication 1, **caractérisé en ce que**, pour déterminer le volume du modèle numérique du récipient :
a) on détermine à partir de plusieurs images radiographiques du récipient, un ensemble complet de tranches (**T**) d'épaisseur donnée, chaque point de chaque tranche contenant une mesure de densité ;
b) on détermine dans chaque tranche (**T**), la surface interne fermée (**Sf**) du récipient, comme la limite de la zone de densité égale à celle de l'air ;
c) on détermine un volume interne pour chaque tranche correspondant au produit de l'épaisseur de la tranche avec la surface interne fermée ;
d) on détermine le volume du récipient comme correspondant au moins à la somme des volumes internes d'au moins une série de tranches connexes.

3. Procédé selon la revendication 2, **caractérisé en ce qu'**il consiste à:
a) acquérir les images radiographiques du récipient alors que le récipient repose par son fond sur un plan de pose mécanique et subit entre chaque acquisition d'une image radiographique, une rotation autour d'un axe de rotation orthogonal au plan de pose mécanique ;
b) déterminer des tranches connexes entre elles en étant délimitées chacune par des plans communs parallèles au plan de pose mécanique ;
c) déterminer le volume interne du récipient en sommant les volumes internes de toutes les tranches comprises entre le plan de pose mécanique et le plan de niveau de remplissage.

4. Procédé selon la revendication 3, **caractérisé en ce qu'**il consiste à déterminer le volume interne du récipient en sommant toutes les tranches complètes comprises entre le plan de pose mécanique et le plan de niveau de remplissage et en y ajoutant :
- lorsque le niveau de remplissage ne passe pas par un plan d'une tranche, le volume (**Vis**) d'une tranche extrême supérieure située entre le plan de niveau de remplissage (**Pn**) et le plan commun entre ladite tranche extrême supérieure et la tranche complète voisine ;
- lorsque le plan de pose ne passe pas par un plan d'une tranche, le volume interne (**Vif**) d'une tranche extrême inférieure située entre le plan de pose (**Pp**) et le plan commun entre ladite tranche extrême inférieure et la tranche complète voisine, ledit volume interne se trouvant délimité par la surface interne (**Sf**) du fond du récipient.

5. Procédé selon la revendication 1, **caractérisé en ce que** pour déterminer le volume interne du modèle numérique du récipient :
a) on construit un modèle numérique tridimensionnel (**M**) du récipient ;
b) on détermine la surface interne (**Sf**) du modèle numérique tridimensionnel du récipient comme étant la surface interne du récipient ;
c) on positionne le plan de niveau de remplissage fermant la surface interne du modèle numérique tridimensionnel du récipient ;
d) on mesure par calcul, le volume délimité par la surface interne du modèle numérique tridimensionnel et le plan de niveau de remplissage, ce volume correspondant à la capacité de remplissage (**Cn**) du récipient.

6. Procédé selon la revendication 5, **caractérisé en ce qu'**on :
a) positionne le modèle numérique tridimensionnel (**M**) du récipient posé sur son fond sur un plan de pose virtuel (**Pr**) de l'espace virtuel considéré comme horizontal par hypothèse ;
b) positionne le plan de niveau de remplissage (**Pn**) parallèle au plan de plan de pose virtuel, fermant la surface interne du modèle numérique tridimensionnel, à une distance (**Hn**) du sommet du modèle numérique tridimensionnel du récipient.

7. Procédé selon la revendication 6, **caractérisé en ce qu'**on positionne le modèle numérique tridimensionnel du récipient sur le plan de pose virtuel de manière à ce que par simulation de la gravité, le modèle numérique tridimensionnel du récipient rempli virtuellement jusqu'au plan de niveau de remplissage (**Pn**) par un liquide de densité déterminée, se trouve dressé en équilibre statique sur trois points de son fond au contact du plan de pose virtuel.

8. Procédé selon la revendication 6, **caractérisé en ce qu'**on positionne le modèle numérique tridimensionnel du récipient sur le plan de pose virtuel de manière à ce que par simulation de la gravité, le modèle tridimensionnel du récipient, se trouve dressé en équilibre statique sur trois points de son fond au contact du plan de pose virtuel.

9. Procédé selon la revendication 6, **caractérisé en ce que** le modèle numérique tridimensionnel (**M**) du récipient est positionné sur son fond sur un plan de pose virtuel qui est la représentation du plan de pose mécanique dans l'espace virtuel.

10. Procédé selon la revendication 6, **caractérisé en ce que** le sommet du modèle numérique tridimensionnel du récipient est déterminé comme :
a) le point appartenant au modèle numérique tridimensionnel, le plus éloigné du plan de pose virtuel ;
b) ou le point d'intersection d'un plan de surface de bague du modèle numérique tridimensionnel avec un axe de symétrie dudit modèle, avec l'axe de symétrie étant sensiblement orthogonal au plan de pose virtuel et le plan de surface de bague étant défini comme :
i) un plan passant par trois points de la surface de bague ;
ii) ou un plan moyen de la surface de bague ;
iii)ou un plan positionné en équilibre statique sur la surface de bague.

11. Procédé selon la revendication 6, **caractérisé en ce qu'**il consiste à positionner le plan de niveau de remplissage (**Pn**) à une distance (**Hn**) nulle du sommet du modèle numérique tridimensionnel pour mesurer la capacité à ras bord du récipient.

12. Procédé selon l'une des revendications 1 à 11, **caractérisé en ce qu'**il consiste à construire un modèle numérique du récipient à partir des images radiographiques afin de déterminer au moins une caractéristique dimensionnelle dudit modèle numérique du récipient, différente de sa capacité.

13. Procédé selon la revendication 12, **caractérisé en ce qu'**il consiste à déterminer en tant que caractéristiques dimensionnelles du modèle numérique du récipient, l'épaisseur de la paroi du récipient, un diamètre extérieur du corps du récipient, un diamètre interne du col du récipient, la verticalité du corps ou du col du récipient, la planéité de la surface de bague du récipient.

## Patentansprüche

1. Verfahren zum Bestimmen des Fassungsvermögens von Glasbehältern (1), umfassend die folgenden Schritte:
• Aufnehmen von mehreren Röntgenbildern (I) eines Behälters aus verschiedenen Projektionswinkeln mit einem computergestützten Röntgentomographiegerät (10),
• Übertragen der Röntgenbilder an einen Rechner (17),
• Analysieren der Röntgenbilder durch den Rechner, um ein digitales Modell (M) des Behälters ausgehend von den Röntgenbildern zu erstellen, **dadurch gekennzeichnet, dass**:
- die Röntgenbilder (I) für einen leeren Behälter aufgenommen werden, um auf den Röntgenbildern nur das Material des Behälters erscheinen zu lassen,
- die Auflageebene des Behälters bestimmt wird, die der Darstellung der mechanischen Auflageebene entspricht, auf der der Behälter mit seinem Boden steht,
- die Röntgenbilder analysiert werden, um:
- die innere Oberfläche (Sf) des digitalen Modells des Behälters zu bestimmen,
- eine Füllstandsebene (Pn) an dem digitalen Modell des Behälters zu positionieren, die parallel zu der Auflageebene und in einem Nennabstand (Hn) von dem Scheitelpunkt des digitalen Modells des Behälters ist,
- durch Berechnen das Innenvolumen des digitalen Modells des Behälters, das durch die innere Oberfläche (Sf) des digitalen Modells und durch die Füllstandsebene begrenzt ist, zu messen, wobei diese Messung das Fassungsvermögen (Cn) des Behälters ist.

2. Verfahren nach Anspruch 1, **dadurch gekennzeichnet, dass** zum Bestimmen des Volumens des digitalen Modells des Behälters:
a) ausgehend von mehreren Röntgenbildern des Behälters ein vollständiger Satz von Scheiben (T) mit gegebener Dicke bestimmt wird, wobei jeder Punkt von jeder Scheibe eine Dichtemessung enthält,
b) in jeder Scheibe (T) die geschlossene innere Oberfläche (Sf) des Behälters als die Grenze des Bereichs der Dichte bestimmt wird, die gleich jener der Luft ist,
c) ein Innenvolumen für jede Scheibe bestimmt wird, das dem Produkt der Dicke der Scheibe mit der geschlossenen innere Oberfläche entspricht,
d) das Volumen des Behälters als mindestens der Summe der Innenvolumen von mindestens einer Reihe von verbundenen Scheiben entsprechend bestimmt wird.

3. Verfahren nach Anspruch 2, **dadurch gekennzeichnet, dass** es darin besteht:
a) die Röntgenbilder des Behälters aufzunehmen, während der Behälter mit seinem Boden auf einer mechanischen Auflageebene steht und zwischen jedem Aufnehmen eines Röntgenbildes eine Drehung um eine Drehachse erfährt, die orthogonal zu der mechanischen Auflageebene ist,
b) miteinander verbundene Scheiben zu bestimmen, indem sie jeweils durch gemeinsame Ebenen begrenzt werden, die zu der mechanischen Auflageebene parallel sind,
c) das Innenvolumen des Behälters zu bestimmen, indem die Innenvolumen von allen Scheiben, die zwischen der mechanischen Auflageebene und der Füllstandsebene liegen, summiert werden.

4. Verfahren nach Anspruch 3, **dadurch gekennzeichnet, dass** es darin besteht, das Innenvolumen des Behälters zu bestimmen, indem alle vollständigen Scheiben, die zwischen der mechanischen Auflageebene und der Füllstandsebene liegen, summiert werden und indem dazu hinzugefügt wird:
- wenn der Füllstand nicht durch eine Ebene einer Scheibe verläuft, das Volumen (Vis) einer oberen Endscheibe, die zwischen der Füllstandsebene (Pn) und der gemeinsamen Ebene zwischen der oberen Endscheibe und der benachbarten vollständigen Scheibe angeordnet ist,
- wenn die Auflageebene nicht durch eine Ebene einer Scheibe verläuft, das Innenvolumen (Vif) einer unteren Endscheibe, die zwischen der Auflageebene (Pp) und der gemeinsamen Ebene zwischen der unteren Endscheibe und der benachbarten vollständigen Scheibe angeordnet ist, wobei das Innenvolumen durch die innere Oberfläche (Sf) des Bodens des Behälters begrenzt ist.

5. Verfahren nach Anspruch 1, **dadurch gekennzeichnet, dass** zum Bestimmen des Innenvolumens des digitalen Modells des Behälters:
a) ein dreidimensionales digitales Modell (M) des Behälters erstellt wird,
b) die innere Oberfläche (Sf) des dreidimensionalen digitalen Modells des Behälters als die innere Oberfläche des Behälters bestimmt wird,
c) die Füllstandsebene positioniert wird, die die innere Oberfläche des dreidimensionalen digitalen Modells des Behälters schließt,
d) durch Berechnen das Innenvolumen, das durch die innere Oberfläche des dreidimensionalen digitalen Modells und die Füllstandsebene begrenzt ist, gemessen wird, wobei dieses Volumen dem Fassungsvermögen (Cn) des Behälters entspricht.

6. Verfahren nach Anspruch 5, **dadurch gekennzeichnet, dass**:
a) das dreidimensionale digitale Modell (M) des Behälters, der auf seinem Boden auf einer virtuellen Auflageebene (Pr) des virtuellen Raums positioniert wird, der hypothetisch als horizontal betrachtet wird, positioniert wird,
b) die Füllstandsebene (Pn) parallel zu der virtuellen Auflageebene, die die innere Oberfläche des dreidimensionalen digitalen Modells des Behälters schließt, in einem Abstand (Hn) von dem Scheitelpunkt des dreidimensionalen digitalen Modells des Behälters positioniert wird.

7. Verfahren nach Anspruch 6, **dadurch gekennzeichnet, dass** das dreidimensionale digitale Modell des Behälters derart auf der virtuellen Auflageebene positioniert wird, dass das dreidimensionale digitale Modell des Behälters, der virtuell bis zur Füllstandsebene (Pn) mit einer Flüssigkeit mit einer bestimmten Dichte gefüllt wird, durch Schwerkraftsimulation auf drei Punkten seines Bodens in Kontakt mit der virtuellen Auflageebene im statischen Gleichgewicht steht.

8. Verfahren nach Anspruch 6, **dadurch gekennzeichnet, dass** das dreidimensionale digitale Modell des Behälters derart auf der virtuellen Auflageebene positioniert wird, dass das dreidimensionale Modell des Behälters durch Schwerkraftsimulation auf drei Punkten seines Bodens in Kontakt mit der virtuellen Auflageebene im statischen Gleichgewicht steht.

9. Verfahren nach Anspruch 6, **dadurch gekennzeichnet, dass** das dreidimensionale digitale Modell (M) des Behälters auf seinem Boden auf einer virtuellen Auflageebene positioniert wird, die die Darstellung der mechanischen Auflageebene in dem virtuellen Raum ist.

10. Verfahren nach Anspruch 6, **dadurch gekennzeichnet, dass** der Scheitelpunkt des dreidimensionalen digitalen Modells des Behälters bestimmt wird als:
a) der Punkt, der zu dem dreidimensionalen digitalen Modell gehört, der von der virtuellen Auflageebene am weitesten entfernt ist,
b) oder der Schnittpunkt einer Ebene einer Ringoberfläche des dreidimensionalen digitalen Modells mit einer Symmetrieachse des Modells, wobei die Symmetrieachse im Wesentlichen orthogonal zur virtuellen Auflageebene ist und die Ringoberflächenebene definiert wird als:
i) eine Ebene, die durch drei Punkte der Ringoberfläche verläuft,
ii) oder eine Mittelebene der Ringoberfläche,
iii) oder eine Ebene, die im statischen Gleichgewicht auf der Ringoberfläche positioniert ist.

11. Verfahren nach Anspruch 6, **dadurch gekennzeichnet, dass** es darin besteht, die Füllstandsebene (Pn) in einem Abstand (Hn), der gleich Null ist, von dem Scheitelpunkt des dreidimensionalen digitalen Modells zu positionieren, um das Gesamtfassungsvermögen des Behälters zu messen.

12. Verfahren nach einem der Ansprüche 1 bis 11, **dadurch gekennzeichnet, dass** es darin besteht, ein digitales Modell des Behälters ausgehend von den Röntgenbildern zu erstellen, um mindestens ein Abmessungsmerkmal des digitalen Modells des Behälters zu bestimmen, das von dem Fassungsvermögen verschieden ist.

13. Verfahren nach Anspruch 12, **dadurch gekennzeichnet, dass** es darin besteht, als Abmessungsmerkmale des digitalen Modells des Behälters die Dicke der Wand des Behälters, einen Außendurchmesser des Körpers des Behälters, einen Innendurchmesser des Halses des Behälters, die Vertikalität des Körpers oder des Halses des Behälters, die Ebenheit der Ringoberfläche des Behälters zu bestimmen.

## Claims

1. A method of determining the capacity of glass containers (1), the method comprising the following steps:
- using an X-ray computed-tomography apparatus (10) to acquire a plurality of X-ray images (I) of the container at different projection angles;
- transmitting the X-ray images to a computer (17); and
- analyzing the X-ray images with the computer for constructing a digital model (M) of the container from the X-ray images;
**characterized in that**:
- acquiring the X-ray images (I) for an empty container in order to cause only the material of the container to appear in the X-ray images;
- determining the support surface of the container; and
- analyzing the X-ray images in order to:
- determine the inside surface (Sf) of the digital model of the container;
- position a filling level plane (Pn) on the digital model of the container parallel to the support surface and at a nominal distance (Hn) from the top of the digital model of the container; and
- measure by calculation the inside volume of the digital model of the container as defined by the inside surface (Sf) of the digital model and by the filling level plane, this measurement being the filling capacity (Cn) of the container.

2. A method according to claim 1, **characterized in that** in order to determine the volume of the digital model of the container, the following steps are performed:
a) using a plurality of X-ray images of the container to determine a complete set of slices (T) of given thickness, each point of each slice containing a density measurement;
b) in each slice (T), determining the closed inside surface (Sf) of the container as the limit of the zone of density equal to the density of air;
c) determining an inside volume for each slice corresponding to the product of the thickness of the slice multiplied by the closed inside surface; and
d) determining the volume of the container as corresponding to at least the sum of the inside volumes of at least one series of connected slices.

3. A method according to claim 2, **characterized in that** it consists in:
a) acquiring the X-ray images of the container while the container is standing via its bottom on a mechanical support surface and while it is being subjected between successive acquisitions of an X-ray image to a movement in rotation about an axis of rotation orthogonal to the mechanical support surface;
b) determining connected-together slices, each of which is defined by common planes parallel to the mechanical support surface; and
c) determining the inside volume of the container by summing the inside volumes of all of the slices lying between the mechanical support surface and the filling level plane.

4. A method according to claim 3, **characterized in that** it consists in determining the inside volume of the container by summing all of the complete slices lying between the mechanical support surface and the filling level plane, and by adding thereto:
- when the filling level does not lie in a plane of a slice, the volume (Vis) of a top end slice situated between the filling level plane (Pn) and the common plane between said top end slice and the neighboring complete slice; and
- when the support surface does not lie in a plane of a slice, the inside volume (Vif) of a bottom end slice situated between the support surface (Pp) and the common plane between said bottom end slice and the neighboring complete slice, said internal volume then being defined by the inside surface (Sf) of the bottom of the container.

5. A method according to claim 1, **characterized in that** in order to determine the inside volume of the digital model of the container, the following steps are performed:
a) constructing a three-dimensional digital model (M) of the container;
b) determining the inside surface (Sf) of the three-dimensional digital model of the container as being the inside surface of the container;
c) positioning the filling level plane that closes the inside surface of the three-dimensional digital model of the container; and
d) measuring by calculation the volume determined by the inside surface of the three-dimensional digital model and by the filling level plane, this volume corresponding to the filling capacity (Cn) of the container.

6. A method according to claim 5, **characterized by**:
a) positioning the three-dimensional digital model (M) of the container standing on its bottom on a virtual support surface (Pr) of the virtual space, which surface is considered as being horizontal by assumption; and
b) positioning the filling level plane (Pn) parallel to the plane of the virtual support surface so as to close the inside surface of the three-dimensional digital model at a distance (Hn) from the top of the three-dimensional digital model of the container.

7. A method according to claim 6, **characterized by** positioning the three-dimensional digital model of the container on the virtual support surface in such a manner that by simulating gravity, the three-dimensional digital model of the container, when filled virtually up to the filling level plane (Pn) by a liquid of determined density, stands upright in static equilibrium on three points of its bottom in contact with the virtual support surface.

8. A method according to claim 6, **characterized by** positioning the three-dimensional digital model of the container on the virtual support surface in such a manner that by simulating gravity, the three-dimensional model of the container stands upright in static equilibrium on three points of its bottom in contact with the virtual support surface.

9. A method according to claim 6, **characterized in that** the three-dimensional digital model (M) of the container is positioned on its bottom on a virtual support surface that is the representation in the virtual space of the mechanical support surface.

10. A method according to claim 6, **characterized in that** the top of the three-dimensional digital model of the container is determined as:
a) the point belonging to the three-dimensional digital model that is the furthest from the virtual support surface; or
b) the point of intersection between a ring surface plane of the three-dimensional digital model and an axis of symmetry of said model, the axis of symmetry being substantially orthogonal to the virtual support surface and the ring surface plane being defined as:
i) a plane passing through three points of the ring surface;
ii) a mean plane of the ring surface; or
iii) a plane positioned in static equilibrium on the ring surface.

11. A method according to claim 6, **characterized in that** it consists in positioning the filling level plane (Pn) at zero distance (Hn) from the top of the three-dimensional digital model in order to measure the brimful capacity of the container.

12. A method according to any one of claims 1 to 11, **characterized in that** it consists in constructing a digital model of the container from X-ray images in order to determine at least one dimensional characteristic of said digital model of the container that is different from its capacity.

13. A method according to claim 12, **characterized in that** it consists in determining as dimensional characteristics of the digital model of the container: the thickness of the wall of the container; an outside diameter of the body of the container; an inside diameter of the neck of the container; the verticality of the body or of the neck of the container; and/or the flatness of the ring surface of the container.
